# FASCICULE DE BREVET EUROPEEN

(11) **EP 2 393 711 B1**
(45) Date de publication et mention de la délivrance du brevet: **19.08.2015**
(21) Numéro de dépôt: 10707617.6
(22) Date de dépôt: 29.01.2010
(51) Int. Cl.: F02K 1/82, F02C 7/047, B64D 33/02, F02C 7/045, B64D 15/04

(54) **PANNEAU POUR LE TRAITEMENT ACOUSTIQUE PLUS PARTICULIEREMENT ADAPTE A UNE ENTREE D'AIR D'UNE NACELLE D'AERONEF**
PLATTE ZUR SCHALLVERARBEITUNG, IM BESONDEREN FÜR DEN LUFTEINLASS EINER FLUGZEUGTRIEBWERKSGONDEL
ACOUSTIC PROCESSING PANEL, MORE PARTICULARLY ADAPTED FOR AN AIR INTAKE IN AN AIRCRAFT NACELLE

(30) Priorité: 03.02.2009 FR 0950663; 23.09.2009 FR 0956552
(43) Date de publication de la demande: 14.12.2011
(73) Titulaire: Airbus Opérations SAS, 31060 Toulouse (FR)
(72) Inventeur: CHELIN, Frédéric, F-32430 Encausse (FR); SURPLY, Thierry, F-31700 Cornebarrieu (FR); HARO, Dominique, F-31170 Tournefeuille (FR); GANTIE, Fabrice, F-31000 Toulouse (FR); LAMBERT, David, F-31270 Cugnaux (FR)
(74) Mandataire: Fantin, Laurent
(86) Numéro de dépôt international: PCT/FR2010/050144
(87) Numéro de publication internationale: WO 2010/089496

(56) Documents cités:
- EP-A- 1 232 944
- FR-A- 2 917 067
- US-A1- 2002 179 773
- US-A1- 2006 219 475

## Description

La présente invention se rapporte à un panneau pour le traitement acoustique plus particulièrement adapté à une entrée d'air d'une nacelle d'aéronef.

Des techniques ont été développées pour réduire le bruit émis par un aéronef, et notamment le bruit émis par un ensemble propulsif, en disposant, au niveau des parois des conduits, des panneaux (également appelés revêtements ou structures) visant à absorber une partie de l'énergie sonore, notamment en utilisant le principe des résonateurs d'Helmholtz. De manière connue, un panneau pour le traitement acoustique comprend de l'extérieur vers l'intérieur une couche poreuse acoustiquement résistive, au moins une structure alvéolaire et une couche réflectrice ou imperméable.

Par couche, on entend une ou plusieurs couches de même nature ou non.

La couche poreuse acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

La structure alvéolaire est délimitée par une première surface imaginaire au niveau de laquelle est susceptible d'être rapportée directement ou indirectement la couche poreuse acoustiquement résistive et par une seconde surface imaginaire au niveau de laquelle est susceptible d'être rapportée directement ou indirectement la couche réflectrice et comprend une pluralité de conduits débouchant d'une part au niveau de la première surface, et d'autre part, au niveau de la seconde surface. Ces conduits sont obturés par d'une part la couche poreuse acoustiquement résistive, et d'autre part, la couche réf lectrice de manière à former une cellule.

Un nid d'abeilles peut être utilisé pour former la structure alvéolaire. Différents types de matériaux peuvent être utilisés pour former le nid d'abeilles.

Lorsque le panneau acoustique est installé au niveau d'une entrée d'air d'une nacelle, ce panneau acoustique doit être également compatible avec un traitement du givre. Par traitement du givre, on entend un procédé ou un système permettant d'éviter la formation et/ou l'accumulation de glace et/ou de givre.

Les documents EP-1.232.944 , qui est considéré comme l'art antérieur le plus proche et décrit les caractéristiques du preambule de la revendication 1, et EP-1.232.945 décrivent des panneaux pour le traitement acoustique compatible avec un traitement du givre utilisant de l'air chaud. Dans ce cas, la structure alvéolaire se présente sous forme de bandes de cellules espacées entre elles ou d'une pluralité de conduits espacés entre eux.

Ce traitement du givre est généralement couplé à un système de drainage permettant d'évacuer l'eau susceptible de s'accumuler dans les cellules de la structure alvéolaire, notamment dans les cellules disposées dans une zone s'étendant de 3h à 9h.

Ce drainage de l'eau est nécessaire pour limiter les risques de détérioration des cellules de la structure alvéolaire en raison du gel de l'eau accumulée, éviter les problèmes de corrosion et maintenir les performances acoustiques.

Selon un mode de réalisation, les parois latérales des cellules comprennent des découpes en partie haute ou en partie basse de manière à faire communiquer les cellules entre elles, les cellules situées à 6h comportant des orifices au niveau de la couche réflectrice de manière à évacuer l'eau du panneau pour le traitement acoustique.

Ce mode de réalisation ne donne pas pleinement satisfaction car la présence d'un système de drainage couplé à un système de traitement du givre avec de l'air chaud tend à annihiler le traitement acoustique et à générer un flux perturbé au niveau du flux d'air entrant dans la nacelle.

Aussi, la présente invention vise à pallier aux inconvénients de l'art antérieur en proposant un panneau pour le traitement acoustique incorporant un traitement du givre et un système de drainage optimisant le rendement des trois fonctions, à savoir du traitement acoustique, du traitement du givre et du drainage.

A cet effet, l'invention a pour objet un panneau pour le traitement acoustique rapporté au niveau d'une entrée d'air d'une nacelle d'aéronef, ledit panneau comprenant au moins une structure acoustiquement résistive et une couche réflectrice entre lesquelles sont disposées selon une direction sensiblement perpendiculaire à la direction longitudinale de la nacelle des bandes de cellules alvéolaires espacées de manière à permettre le passage d'air chaud prévu pour un traitement du givre, caractérisé en ce qu'il comprend des conduits pour l'air chaud délimités chacun par au moins une cloison s'étendant depuis la couche acoustiquement résistive jusqu'à la couche réflectrice de manière à isoler selon la direction longitudinale lesdites bandes de cellules.

D'autres caractéristiques et avantages ressortiront de la description qui va suivre de l'invention, description donnée à titre d'exemple uniquement, en regard des dessins annexés sur lesquels :
- la figure 1 est une vue en perspective d'une nacelle d'aéronef,
- Ja figure 2 est une coupe selon un plan longitudinal de la partie supérieure de l'avant d'une nacelle,
- la figure 3 est une vue en perspective d'un panneau selon un premier mode de réalisation de l'invention,
- la figure 4 est une vue en perspective illustrant en détail un conduit de drainage selon un mode de réalisation,
- la figure 5 est une vue en perspective illustrant par transparence les orifices d'évacuation de l'eau selon le mode de réalisation illustré sur la figure 3,
- la figure 6 est une vue de dessus illustrant les flux de liquides dans un panneau pour le traitement acoustique selon un mode de réalisation de l'invention,
- la figure 7 est une coupe illustrant un panneau selon un deuxième mode de réalisation de l'invention sans les couches réflectrice et acoustiquement résistive,
- la figure 8 est une vue en perspective d'une portion d'un panneau sans la couche réflectrice selon un troisième mode de réalisation de l'invention,
- la figure 9 est une vue en perspective du dessus du panneau illustré sur la figure 8,
- la figure 10 est une coupe selon un plan longitudinal de la partie inférieure de l'avant d'une nacelle selon l'invention,
- la figure 11 est une vue en perspective d'une portion d'un panneau sans couche réflectrice selon un quatrième mode de réalisation de l'invention, et
- la figure 12 est une vue de dessus du panneau illustré sur la figure 11.

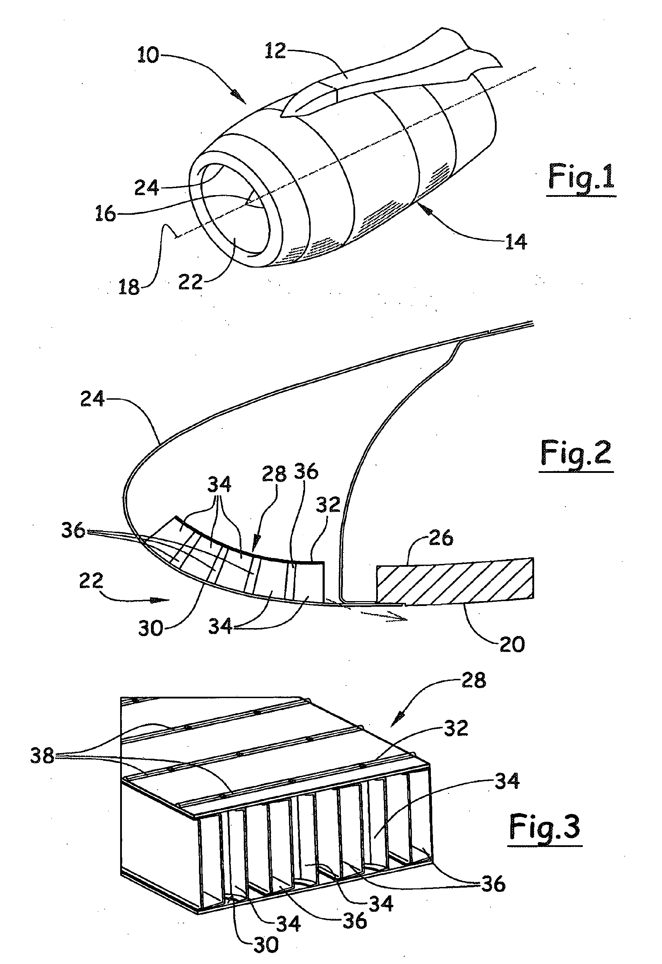

Sur la figure 1, on a représenté un ensemble propulsif 10 d'un aéronef relié sous la voilure par l'intermédiaire d'un mât 12. Toutefois, cet ensemble propulsif pourrait être relié à d'autres zones de l'aéronef.

Cet ensemble propulsif comprend une nacelle 14 dans laquelle est disposée de manière sensiblement concentrique une motorisation entraînant une soufflante montée sur son arbre 16. Pour la description, la direction longitudinale correspond à celle de l'axe de la nacelle référencé 18. Les plans perpendiculaires à la direction longitudinale sont appelés plans transversaux.

La nacelle 14 comprend une paroi 20 délimitant un conduit avec une entrée d'air 22 à l'avant, une première partie du flux d'air entrant, appelée flux primaire, traversant la motorisation pour participer à la combustion, la seconde partie du flux d'air, appelée flux secondaire, étant entrainée par la soufflante et s'écoulant dans un conduit annulaire délimité par la paroi intérieure 20 de la nacelle et la paroi extérieure de la motorisation.

La partie frontale 24 de l'entrée d'air 22, appelée également lèvre, décrit une forme sensiblement circulaire qui s'étend dans un plan qui peut être sensiblement perpendiculaire à l'axe longitudinal 18, ou non perpendiculaire, avec la partie frontale située à 12h légèrement avancée. Toutefois, d'autres formes d'entrée d'air peuvent être envisagées.

Selon les dimensions de la nacelle, l'entrée d'air peut comprendre un premier rayon de courbure faible correspondant sensiblement au rayon du conduit 20 dans un plan perpendiculaire à la direction longitudinale ainsi qu'un second rayon de courbure faible dans un plan longitudinal, notamment entre le conduit 20 et le bord d'attaque de l'entrée d'air 22 de la nacelle.

Pour la suite de la description, on entend par surface aérodynamique l'enveloppe de l'aéronef en contact avec les flux aérodynamiques.

Pour limiter l'impact des nuisances sonores, un panneau pour le traitement acoustique 26 visant à absorber une partie de l'énergie sonore, notamment en utilisant le principe des résonateurs d'Helmholtz est prévu notamment au niveau des surfaces aérodynamiques de la paroi intérieure 20. De manière connue, ce panneau pour le traitement acoustique comprend de l'intérieur vers l'extérieur une couche réflectrice, au moins une structure alvéolaire et au moins une structure acoustiquement résistive.

En complément, un panneau pour le traitement acoustique 28 est prévu au niveau de l'entrée d'air 22.

Selon l'invention, le panneau pour le traitement acoustique 28 comprend une structure acoustiquement résistive 30 et une couche réflectrice 32 entre lesquelles sont disposées en alternance, selon une direction sensiblement perpendiculaire à la direction longitudinale, des bandes 34 de cellules alvéolaires et des conduits 36 pour l'air chaud isolant selon la direction longitudinale desdites bandes 34 de cellules, ainsi que des conduits de drainage 38 assurant l'évacuation de liquides disposés contre la couche réflectrice afin de pas perturber la fonction de la couche acoustiquement résistive 30.

Selon l'invention, les conduits 36 forment un circuit pour l'air chaud de l'antigivrage indépendant et isolé d'un circuit constitué des conduits 38 de drainage de manière à ne pas perturber le fonctionnement du traitement acoustique et la laminarité des écoulements au niveau de l'entrée d'air. En effet, si ces deux circuits n'étaient pas indépendants et parfaitement isolés, les gradients de pression au niveau de la couche acoustiquement résistive 30 généreraient des circulations d'air dans le panneau susceptibles d'atténuer l'effet du traitement acoustique et de créer des perturbations au niveau des écoulements entrant dans la nacelle.

Les conduits de drainage 38 peuvent ne pas être prévus sur toute la circonférence de l'entrée d'air mais seulement au niveau des zones entre 3h et 9h.

Les bandes 34 de cellules alvéolaires sont isolées entre elles de manière à ne pas permettre un écoulement d'air entre deux points espacés selon la direction longitudinale prévus dans deux bandes différentes. Par conséquent, cet agencement permet d'optimiser le traitement acoustique et de limiter les risques d'apparition de perturbations du flux d'air entrant dans le conduit 20 en raison de l'aspiration de l'air à l'intérieur de la structure pour le traitement acoustique en raison d'une dépression en un premier point et son refoulement à l'extérieur de ladite structure en un second point.

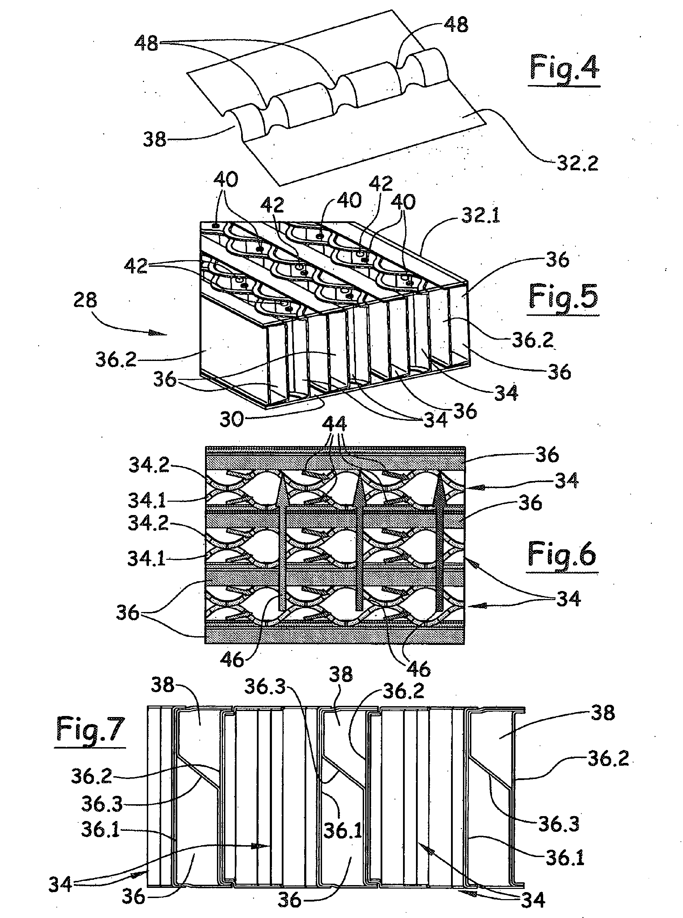

Selon un mode de réalisation illustré sur les figures 5 à 9, chaque bande 34 de cellules alvéolaires comprend au moins deux parois latérales 34.1 et 34.2 ondulées qui s'étendent entre la structure acoustiquement résistive 30 et la couche réflectrice 32, avec des bords tombés pour assurer une jonction satisfaisante avec ladite structure acoustiquement résistive 30 et ladite couche réflectrice 32, les parois latérales 34.1 et 34.2 étant agencées de manière à ce que les ondulations soient sensiblement symétriques par rapport au plan de contact desdites parois latérales 34.1 et 34.2.

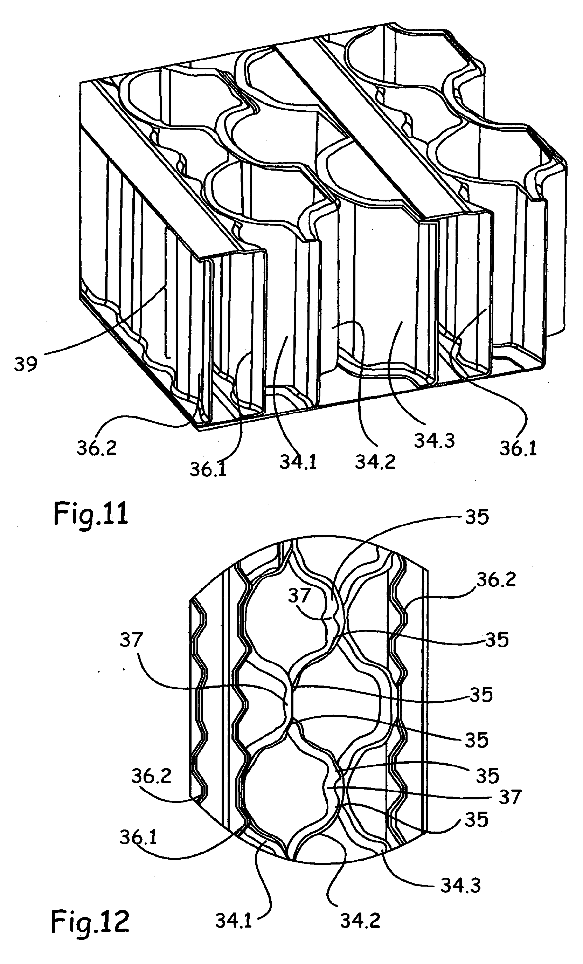

Selon un autre mode de réalisation illustré sur les figures 11 et 12, chaque bande 34 de cellules alvéolaires comprend trois parois latérales 34.1 à 34.3 ondulées qui s'étendent entre la structure acoustiquement résistive 30 et la couche réflectrice 32, avec des bords tombés pour assurer une jonction satisfaisante avec ladite structure acoustiquement résistive 30 et ladite couche réflectrice 32.

Avantageusement, chaque paroi a une forme ondulée comportant successivement une forme en creux et une forme en saillie. Pour former les cellules, les parois 34.1, 34.2 et 34.3 ont toute le même pas (une forme en creux et une forme en saillie) et les formes en creux de la paroi 34.2 sont en contact avec les formes en saillie de la paroi 34.1 alors que les formes en saillie de la paroi 34.2 sont en contact avec les formes en creux de la paroi 34.3.

Pour améliorer l'étanchéité entre les cellules, les formes en saillie comprennent une double ondulation avec deux crêtes 35 encadrant un sillon 37. Le rayon de courbure du sillon 37 de la forme en saillie d'une paroi est sensiblement identique à celui de la forme en creux de la paroi adjacente de manière à augmenter la surface de contact entre les deux parois et obtenir un chemin de fuite entre deux cellules adjacentes plus long et donc une meilleure étanchéité entre lesdites deux cellules.

Chaque conduit 36 est délimité par au moins une cloison, généralement deux cloisons 36.1 et 36.2 dont au moins une s'étend entre la structure acoustiquement résistive 30 et la couche réf lectrice 32 de manière à isoler selon une direction longitudinale, deux bandes 34 de cellules alvéolaires.

Selon des modes de réalisation illustrés sur les figures 5 et 7, les deux cloisons 36.1 et 36.2 s'étendent depuis la couche réflectrice 32 jusqu'à la couche acoustiquement résistive 30. Une des deux cloisons 36.1 a une forme en C, avec des ailes dont les dimensions sont adaptées à la largeur du conduit 36, une aile étant plaquée contre la couche acoustiquement résistive 30, l'autre contre la couche réflectrice 32. L'autre cloison 36.2 comprend des bords tombés de manière à assurer une liaison sensiblement étanche avec les extrémités des ailes de l'autre cloison 36.1 et ainsi délimiter le conduit 36.

Selon un mode de réalisation illustré sur la figure 7, le conduit délimité par les cloisons 36.1 et 36.2 est scindé par une troisième cloison 36.3 en deux conduits, un premier conduit 36 pour l'air chaud en contact avec la couche acoustiquement résistive 30 et un second conduit 38 de drainage en contact avec la couche réflectrice 32.

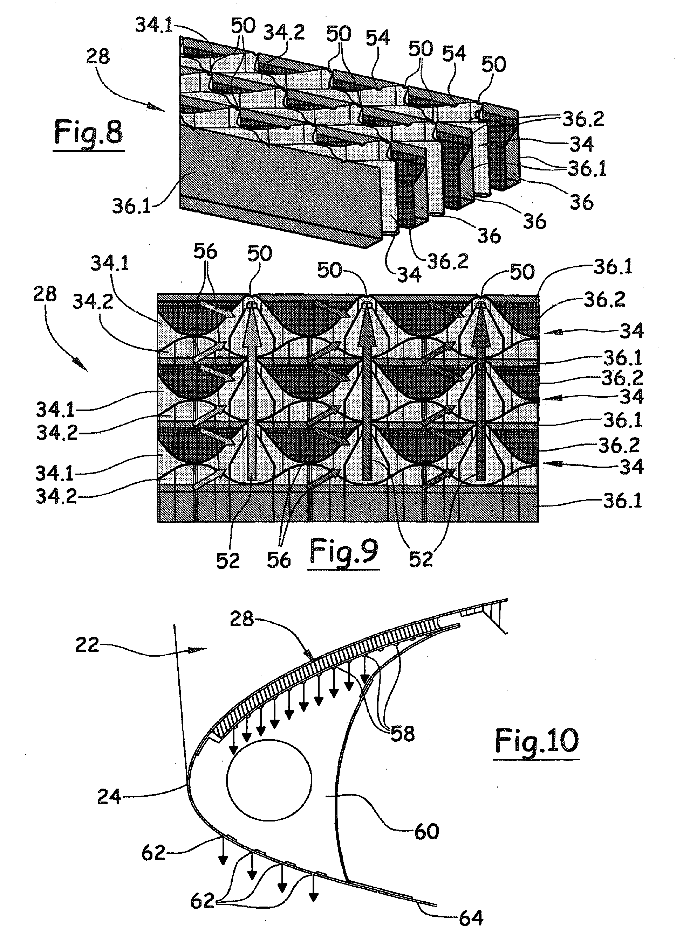

Selon un autre mode de réalisation illustré sur les figures 8 et 9, seule une des cloisons 36.1 s'étend depuis la couche acoustiquement résistive 30 jusqu'à la couche réflectrice 32. De préférence, cette cloison 36.1 a une forme en L. La seconde cloison 36.2 comprend un premier bord relié à une extrémité d'une aile de la première cloison 36.1 et un second bord relié à l'autre aile de la première cloison 36.1 de manière décalée par rapport à son extrémité afin que les bandes de cellules alvéolaires ne soient séparées que par une seule cloison 36.1.

Selon un autre mode de réalisation illustré sur les figures 11 et 12, au moins une des cloisons 36.1, 36.2, et de préférence les deux, ont un profil ondulé, dans un plan parallèle à la couche réflectrice, au niveau de la partie centrale 39. Cette configuration permet aux cloisons de mieux résister aux efforts exercés par la pression du fluide circulant dans le conduit 36. Elle assure également une meilleure stabilité et augmente la résistance à la compression. Elle limite également les vibrations du conduit 36 et aide à la formabilité.

Le fait que les bandes 34 soient disposées selon une direction sensiblement perpendiculaire à la direction longitudinale et la présence d'au moins une cloison 36.1 entre les cellules alvéolaires de deux bandes 34 consécutives permet d'isoler lesdites cellules et limite les risques d'apparition d'un flux à l'intérieur du panneau pour le traitement acoustique entre deux points distants selon la direction longitudinale et séparés par au moins une cloison 36.1. Cet agencement permet de ne pas amoindrir les effets du traitement acoustique.

Les conduits 36 peuvent être reliés à leurs extrémités par des collecteurs, un prévu pour l'arrivée de l'air chaud en provenance du moteur et un autre pour l'évacuation de l'air chaud après le traitement du givre. Cependant, l'invention n'est pas limitée à cet agencement, les conduits 36 étant alimentés en air chaud par tous moyens appropriés.

De préférence, les conduits 36 pour l'air chaud sont sensiblement rectilignes pour limiter les pertes de charge.

Le fait de les disposer dans des plans sensiblement perpendiculaires à la direction longitudinale permet de simplifier la circulation de l'air chaud et limite la surconsommation de l'aéronef ainsi que les contraintes mécaniques dans la zone pressurisée.

De préférence, les conduits 36 ont une largeur comprise entre 5 et 35 mm. Selon un mode de réalisation illustré sur la figure 7, les conduits de drainage 38 sont prévus entre les bandes 34 de cellules alvéolaires et s'étendent selon une direction sensiblement perpendiculaire à la direction longitudinale.

Dans ce cas, pour chaque bande 34 de cellules alvéolaires, des orifices d'évacuation sont réalisés au niveau d'une des cloisons 36.1 ou 36.2 de manière à ce que les liquides sortent des cellules et soient évacués en direction du conduit de drainage 38 adjacent. Les cellules qui ne sont pas en contact avec un conduit de drainage 38 communiquent avec des cellules qui le sont.

Dans tous les cas, toutes les cellules d'une même bande communiquent directement ou indirectement (par le biais d'autres cellules) au même conduit de drainage 38. Cet agencement permet d'isoler les cellules de deux bandes 34 différentes.

Selon un autre mode de réalisation illustré sur les figures 3 à 6, la couche réflectrice 32 comprend deux peaux accolées, une première peau 32.1 en contact avec les bandes 34 de cellules alvéolaires comprenant des orifices 40 d'évacuation permettant de faire communiquer certaines cellules avec un conduit de drainage 38 ménagé entre la première peau 32.1, et la seconde peau 32.2.

Comme illustré sur la figure 5, les cellules qui ne communiquent pas directement avec le conduit 38 comprennent chacune au niveau d'une paroi latérale un orifice 42 de communication avec une cellule qui communique avec le conduit 38. Sur la figure 6, on a représenté en 44 des flux de liquides entre deux cellules et en 46 la direction des écoulements des liquides dans les conduits 38.

Selon ce mode de réalisation, les conduits de drainage 38 s'étendent selon une direction sensiblement longitudinale et sont reliés au niveau de leurs extrémités par des conduits collecteurs qui s'étendent selon une direction sensiblement perpendiculaire à la direction longitudinale.

Contrairement aux conduits 36 pour l'air chaud qui ont une section importante pour obtenir un traitement du givre efficace, les conduits de drainage 38 ont une section réduite limitant les débits d'air d'un point à l'autre. Cet agencement permet de limiter les débits d'air entre deux bandes 34 même si les conduits de drainage s'étendent selon la direction longitudinale.

Comme illustré sur la figure 4, les conduits 38 ont de préférence des sections variables sur leur longueur, avec au moins un étranglement 48, de préférence ménagé entre deux orifices 40 consécutifs. Cet agencement permet d'avoir une section importante pour le conduit 38 au droit des orifices 40 de manière à simplifier les ajustements tout en limitant le débit des éventuels flux d'air entre les cellules alvéolaires de deux bandes 34 différentes.

A titre d'exemple, les conduits de drainage 38 sont espacés de l'ordre de 5 à 35 mm.

Selon un autre mode de réalisation illustré sur les figures 8 et 9, les conduits de drainage 38 sont constitués de cellules alvéolaires reliées entre elles de manière à former un réseau de conduits de drainage.

Dans ce cas, les conduits 36 pour l'air chaud ne s'étendent pas sur toute la hauteur du panneau, et les bandes 34 sont isolées par une seule cloison 36.1. Les bandes 34 comprennent deux parois latérales 34.1 et 34.2 ondulées, l'une d'elles 34.1 comprenant une découpe adaptée au conduit 36 et étant en contact avec une cloison 36.1 sur seulement une partie de la hauteur.

Les conduits 38 peuvent être remplis de matériaux poreux hydrophobes (fibres de carbone, fibres de verre, ...) permettant la circulation de l'eau dans les conduits tout en augmentant la résistance à la circulation de l'air dans lesdits conduits.

Selon ce mode de réalisation, le panneau comprend au niveau des zones où les parois latérales 34.1 et 34.2 sont en contact de part et d'autre d'une cloison 36.1 des orifices 50 permettant de faire communiquer des cellules de bandes adjacentes de manière à générer un flux 52 de liquides selon la direction longitudinale. Les cellules délimitées par une paroi latérale et la cloison 36.1 sont munies d'orifices 54 permettant de créer des flux 56 pour évacuer les liquides en direction d'une cellule délimitée par deux parois latérales.

Les orifices 50 ont une section réduite de manière à former un étranglement pour limiter le débit d'air entre les cellules de bandes 34 différentes.

Le mode de réalisation illustré sur les figures 7 et 8 a pour avantage de ne pas perforer la couche réflectrice 32.

Comme illustré sur la figure 10, les liquides drainés par les conduits de drainage 38 sont dirigés vers la partie inférieure du panneau. A ce niveau, le réseau de conduits 38 comprend au moins un orifice d'évacuation 58 permettant l'écoulement des liquides dans la cavité 60 du bord d'attaque, pour être ensuite rejetés vers l'extérieur par des orifices 62 ménagés au niveau de la paroi extérieure 64 de la nacelle.

## Revendications

1. Panneau pour le traitement acoustique rapporté au niveau d'une entrée d'air d'une nacelle d'aéronef, ledit panneau comprenant au moins une structure acoustiquement résistive (30) et une couche réflectrice (32) entre lesquelles sont disposées selon une direction sensiblement perpendiculaire à la direction longitudinale (18) de la nacelle des bandes (34) de cellules alvéolaires espacées de manière à permettre le passage d'air chaud prévu pour un traitement du givre, **caractérisé en ce qu'**il comprend des conduits (36) pour l'air chaud délimités chacun par au moins une cloison (36.1) s'étendant depuis la couche acoustiquement résistive (30) jusqu'à la couche réflectrice (32) de manière à isoler selon la direction longitudinale lesdites bandes (34) de cellules.

2. Panneau pour le traitement acoustique selon la revendication 1, **caractérisé en ce qu'**il comprend pour chaque conduit (36) deux cloisons (36.1, 36.2) s'étendant depuis la couche réflectrice (32) jusqu'à la couche acoustiquement résistive (30), une première cloison (36.1) ayant une forme en C, la deuxième cloison (36.2) comprenant des bords tombés de manière à assurer une liaison sensiblement étanche avec les extrémités des ailes de la première cloison (36.1).

3. Panneau pour le traitement acoustique selon la revendication 2, **caractérisé en ce qu'**il comprend une troisième cloison (36.3) de manière à délimiter avec les première et deuxième cloisons (36.1, 36.2) deux conduits, un premier conduit (36) pour l'air chaud en contact avec la couche acoustiquement résistive (30) et un second conduit (38) de drainage en contact avec la couche réflectrice (32).

4. Panneau pour le traitement acoustique selon la revendication 1, **caractérisé en ce qu'**il comprend pour chaque conduit (36) une première cloison (36.1) avec une forme en L qui s'étend depuis la couche réflectrice (32) jusqu'à la couche acoustiquement résistive (30) et une seconde cloison (36.2) dont un premier bord est relié à une extrémité d'une aile de la première cloison (36.1) et dont le second bord est relié à l'autre aile de la première cloison (36.1) de manière décalée par rapport à son extrémité afin que les bandes de cellules alvéolaires ne soient séparées que par une seule cloison (36.1).

5. Panneau pour le traitement acoustique selon l'une quelconque des revendications 2 à 4, **caractérisé en ce qu'**au moins l'une des cloisons (36.1, 36.2) d'un conduit (36) a un profil ondulé dans un plan parallèle à la couche réflectrice.

6. Panneau pour le traitement acoustique selon l'une quelconque des revendications 2 à 4, **caractérisé en ce qu'**une bande (34) de cellules alvéolaires comprend au moins deux parois (34.1, 34.2, 34.3) ondulées, les formes en saillie d'une paroi étant en contact avec les formes en creux de la paroi adjacente de manière à délimiter des cellules.

7. Panneau pour le traitement acoustique selon la revendication 6, **caractérisé en ce que** les formes en saillie comprennent une double ondulation avec deux crêtes (35) encadrant un sillon (37) dont le rayon de courbure est sensiblement identique à celui de la forme en creux de la paroi adjacente de manière à augmenter la surface de contact entre les deux parois.

8. Nacelle d'aéronef comprenant un panneau pour le traitement acoustique selon l'une quelconque des revendications précédentes.

## Patentansprüche

1. Platte für die Schallbehandlung, die im Bereich des Lufteinlasses einer Triebwerksgondel eines Luftfahrzeugs angebracht ist und die Platte wenigstens eine schalldämpfende Schicht (30) und eine reflektierende Schicht (32) aufweist, zwischen denen im Wesentlichen im rechten Winkel zur Längsrichtung (18) der Triebwerksgondel Bänder (34) von kammerartigen Zellen angeordnet sind, die im Abstand angeordnet sind, um das Hindurchströmen von für die Enteisung vorgesehener warmer Luft zu gestatten, **dadurch gekennzeichnet, dass** die Platte Leitungen (36) für die warme Luft aufweist, die jeweils durch wenigstens eine Trennwand (36.1) begrenzt sind, die sich von der schalldämpfenden Schicht (30) bis zu der reflektierenden Schicht (32) erstreckt, um die Bänder (34) der Zellen in der Längsrichtung zu isolieren.

2. Platte für die Schallbehandlung nach Anspruch 1,
**dadurch gekennzeichnet, dass** diese für jede Leitung (36) zwei Trennwände (36.1, 36.2) aufweist, die sich von der reflektierenden Schicht (32) bis zu der schalldämpfenden Schicht (30) erstrecken, wobei eine erste Trennwand (36.1) C-förmig ausgebildet ist und die zweite Trennwand (36.2) mit Einzügen versehene Kanten aufweist, um eine im Wesentlichen dichte Verbindung mit den Enden der Schenkel der ersten Trennwand (36.1) zu gewährleisten.

3. Platte für die Schallbehandlung nach Anspruch 2,
**dadurch gekennzeichnet, dass** diese eine dritte Trennwand (36.3) aufweist, um mit der ersten und der zweiten Trennwand (36.1, 36.2) zwei Leitungen zu begrenzen, wobei eine erste Leitung (36) für warme Luft in Kontakt mit der schalldämpfenden Schicht (30) und eine für den Abfluss vorgesehene zweite Leitung (38) in Kontakt mit der reflektierenden Schicht (32) steht.

4. Platte für die Schallbehandlung nach Anspruch 1,
**dadurch gekennzeichnet, dass** diese für jede Leitung (36) eine erste L-förmig ausgebildete Trennwand (36.1) aufweist, die sich von der reflektierenden Schicht (32) bis zur schalldämpfenden Schicht (30) erstreckt, und eine zweite Trennwand (36.2), deren erster Rand mit einem Ende eines Schenkels der ersten Trennwand (36.1) verbunden ist und deren zweiter Rand mit dem anderen Schenkel der ersten Trennwand (36.1) derart verbunden ist, dass dieser bezüglich deren Ende versetzt ist, so dass die Bänder der kammerartigen Zellen nur durch eine einzelne Trennwand (36.1) getrennt sind.

5. Platte für die Schallbehandlung nach einem der Ansprüche 2 bis 4, **dadurch gekennzeichnet, dass** wenigstens eine der Trennwände (36.1, 36.2) einer Leitung (36) ein gewelltes Profil in einer zu reflektierenden Schicht parallelen Ebene hat.

6. Platte für die Schallbehandlung nach einem der Ansprüche 2 bis 4, **dadurch gekennzeichnet, dass** ein Band (34) der kammerartigen Zellen wenigstens zwei (34.1, 34.2, 34.3) gewellte Wände aufweist, wobei die nach vorne gewölbten Formen einer Wand in Kontakt mit den nach hinten gewölbten Formen des benachbarten Bands in Kontakt steht, um die Zellen zu begrenzen.

7. Platte für die Schallbehandlung nach Anspruch 6,
**dadurch gekennzeichnet, dass** die nach vorne gewölbten Formen eine doppelte Wellung mit zwei Vorsprüngen (35) aufweisen, die eine Rille (37) einschließen, deren Krümmungsradius im Wesentlichen identisch zu denjenigen der nach hinten gewölbten Form der benachbarten Wand ist, um die Kontaktfläche zwischen den zwei Wänden zu vergrößern.

8. Triebwerksgondel eines Luftfahrzeugs mit einer Platte für die Schallbehandlung nach einem der vorhergehenden Ansprüche.

## Claims

1. Acoustic treatment panel that is connected to an air intake of an aircraft nacelle, whereby said panel comprises at least one acoustically resistive structure (30) and a reflective layer (32), between which are located - in a direction that is essentially perpendicular to the longitudinal direction (18) of the nacelle - bands (34) of alveolar cells spaced in such a way as to allow the passage of hot air provided for a frost treatment, **characterized in that** it comprises pipes (36) for hot air that are each delimited by at least one partition (36.1) that extends from the acoustically resistive layer (30) up to the reflective layer (32) in such a way as to insulate said bands (34) of cells in the longitudinal direction.

2. Acoustic treatment panel according to Claim 1, wherein for each pipe (36), it comprises two partitions (36.1, 36.2) that extend from the reflective layer (32) to the acoustically resistive layer (30), a first partition (36.1) that has a C shape, with the second partition (36.2) comprising dropped edges in such a way as to ensure an essentially tight connection with the ends of the wings of the first partition (36.1).

3. Acoustic treatment panel according to Claim 2, wherein it comprises a third partition (36.3) in such a way as to delimit - with the first and second partitions (36.1, 36.2) -two pipes, a first pipe (36) for the hot air in contact with the acoustically resistive layer (30) and a second drain pipe (38) in contact with the reflective layer (32).

4. Acoustic treatment panel according to Claim 1, wherein for each pipe (36), it comprises a first partition (36.1) with an L shape that extends from the reflective layer (32) up to the acoustically resistive layer (30) and a second partition (36.2) of which a first edge is connected to one end of a wing of the first partition (36.1) and of which the second edge is connected to the other wing of the first partition (36.1) in an offset manner relative to its end so that the bands of alveolar cells are separated only by a single partition (36.1).

5. Acoustic treatment panel according to any of Claims 2 to 4, wherein at least one of the partitions (36.1, 36.2) of a pipe (36) has a wavy profile in a plane that is parallel to the reflective layer.

6. Acoustic treatment panel according to any of Claims 2 to 4, wherein a band (34) of alveolar cells comprises at least two wavy walls (34.1, 34.2, 34.3), with the projecting shapes of a wall being in contact with the hollow shapes of the adjacent wall in such a way as to delimit the cells.

7. Panel for acoustic treatment according to Claim 6, wherein the projecting shapes comprise a double undulation with two peaks (35) framing a trough (37) whose radius of curvature is essentially identical to the one of the hollow shape of the adjacent wall in such a way as to increase the contact surface between the two walls.

8. Aircraft nacelle that comprises an acoustic treatment panel according to any of the preceding claims.
